Europäisches Patentamt

European Patent Office

Office européen des brevets

(11) Publication number: **0 110 708 B1**

(12) **EUROPEAN PATENT SPECIFICATION**

(45) Date of publication of patent specification: **04.03.92** (51) Int. Cl.⁵: **B44B 5/00**, B44B 5/02

(21) Application number: **83307267.1**

(22) Date of filing: **29.11.83**

(54) **Method for compression moulding or embossing.**

(30) Priority: **30.11.82 IE 2849/82**

(43) Date of publication of application:
**13.06.84 Bulletin 84/24**

(45) Publication of the grant of the patent:
**04.03.92 Bulletin 92/10**

(84) Designated Contracting States:
**AT BE CH DE FR GB IT LI LU NL SE**

(56) References cited:
DE-A- 2 228 926      DE-C- 426 619
DE-C- 826 253       FR-A- 1 009 127
US-A- 1 582 714      US-A- 2 343 191
US-A- 2 488 301      US-A- 2 752 632

(73) Proprietor: **Gartland, Matthew**
**Raharney**
**Mullingar County Westmeath(IE)**

(72) Inventor: **Gartland, Matthew**
**Raharney**
**Mullingar County Westmeath(IE)**

(74) Representative: **Arthur, Bryan Edward et al**
**Withers & Rogers 4 Dyer's Buildings Holborn**
**London EC1N 2JT(GB)**

Rank Xerox (UK) Business Services

# Description

This invention relates to a method which uses a die for compression moulding and embossing the surface of a relatively soft article or substrate such as wood, thermoplastics material or various varieties of particle board such as chipboard, flake board, fibre board, sawdust board and the like. The invention was developed with special reference to compression moulding and decorative surface embossing of wood based furniture door panels, but its applications are by no means thus limited, as will become apparent from the following description.

It is now often desired to achieve the effect of machined or carved decoration, or of panel construction, in cheaper materials than solid wood, plywood, etc., in which such effects have previously been created. This is the case in all types of furniture manufacture, wall and ceiling panelling, partitioning, coffins and other structures. The cheaper materials are those mentioned above, and composite materials made from them.

A standard compression moulding and embossing procedure is to impress the required pattern using a metal die at a high temperature and pressure. Conventional metal dies are commonly made by casting, machining or spark erosion, all expensive and difficult processes. They are, furthermore usually placed into direct contact with the surface of the means which supplies the pressure and heat to the die. The design of conventional dies and the method of anchorage to the surface of the pressure/heating means dictates that a minimum distance from the surface to the deepest point of die must obtain. This gives rise to heat transfer problems, with the leading or deepest part of the die from the heating surface tending to be cooler and the outer periphery of the die is also cooler. This problem, and the fact that conventional dies usually only transfer heat to the article or substrate in the immediate design area, often damages the outer periphery of the design area during the processing, and obscurity of the design is obtained. This occurrence is primarily due to inadequate heating and pressure in the periphery area. This is commonly referred to as the "cold leading edge".

DE-A-2 228 926, acknowledges that conventional methods of producing coated boards, that is, chipboard bearing a plastic surface, give rise to difficulties in deep embossing and also as far as precision of the design to be embossed is concerned. To overcome these drawbacks, DE-A-2 228 926, teaches the use of an additional layer of wood fibres impregnated with synthetic resin at the surface of the board.

In more detail, DE-A-2 228 926 concerns the manufacture of a chip board the surface of which is covered with a synthetic layer. In most of the methods described in this document, a panel of chipboard is embossed after the synthetic layer has been applied on to its surface. Furthermore, in the only process described in DE-A-2 228 926 where compression is contemplated before application of the plastic sheet, it is acknowledged that the possibility of deformation is limited and that such boards possess very poor dimensional accuracy.

Moreover, according to the preferred solution given in this prior publication, the provision of an additional layer of wood fibres impregnated with the plastic resin on the surface of the chipboard is emphasised as being essential for a satisfactory subsequent deep forming, and absolutely no hint or incitement to the use of a carrier plate to be brought into contact with the board can be found in this document. Consequently, its teaching taken alone or in combination with the general knowledge of the person skilled in the art would rather lead such a person away from the method of the present invention.

US-A-2 488 301 is the only other known document which together with the DE-A-2 228 926 relates to the compression moulding of a wood based article. However, the aim of US-A-2 488 301 is densification of substrate wood based material in order to produce a hardened surface and, to this end, the use of a plasticising agent is contemplated. Neither the use of a carrier plate for the dies, nor the contact of such a plate with the surface of the article is even suggested in US-A-2 488 301.

US-A-2 343 191 describes a method for embossing an uncured plastic blank such as Bakelite in an uncured state, i.e. an article made of a thermosettable material which is to be cured during the embossing process. Having regard to the low temperatures attained in such a process, there would not be any appreciable "cold leading edge" effect.

The problems encountered with such a curable material are so different from when using wood based materials that the skilled person would not have, a priori, any reason to consult this document in order to improve a method of compression moulding a wood based panel which necessitates higher temperatures and pressures. Moreover, this document is 40 years old and even if the skilled person did consult the document there is nothing therein which would suggest to him to bring a head supporting the die into contact with the plastic blank to be embossed.

Similarly, documents DE-A-426 619, US-A-2 752 632, US-A-1 582 714 and FR-A-1 009 127 cannot give any incitement to the skilled person towards the solution according to the present invention because they all concern methods for embossing plastic or thermoplastic articles rather than wood and none of them even suggests the use of a carrier plate extending laterally beyond the die on all sides.

Such a use is nevertheless taught by DE-A-826 253 but, due to the fact that the elements for securing the dies to the carrier plate are disposed laterally between the plate and the surface of the board, the latter would be prevented from coming into contact with the plate and thus the skilled man would not find in this document any hint which would lead him to the present invention. Thus, even by combining the teachings of several of the above-mentioned prior documents, the person skilled in the art would not be able to find all the features recited in the invention herein in Claim 1 or to find any hint leading him to the solution proposed in present invention.

Having again regard to the teaching of DE-A-2 228 926, the technical problem that the present invention addresses is to find an alternative and simplified method of compression moulding or embossing a board of wood based material by pressing a heated die into the surface of the board, which method avoids the problem of the so-called "cold leading edge" effect, i.e., as indicated above, the problem that arises due to the leading or deepest part of the die from the heating surface tending to be cooler and the outer periphery of the die also being cooler.

According to the present invention, a method of compression moulding or embossing a board of wood-based material (12) by pressing a heated die (2) into the surface of the board is characterised in that the die is secured to one surface of a carrier plate (1) which is of thermally conductive material and extends laterally beyond the edge 5 of the die, the die being heated and pressed into the board by applying heat and pressure to the die via the carrier plate, the die being pressed into the board to a depth such that the said surface of the carrier plate contacts the surface of the article. The use of a carrier plate enables heat to transfer uniformly from the pressure/heating means to the die.

It will be appreciated that the method of the invention may be used for surface decoration by a match mould process as hereinafter described.

The use of the carrier plate has further distinct advantages namely:-

1. Where the penetration depth of the compression moulding or embossing of a surfaced or pre-surfaced article or substrate does not exceed 2mm.

2. In the use of the die and carrier plate in conjunction with a previously moulded substrate by the same tool to form a match mould process. This allows a highly defined moulded substrate to be accurately surface decorated and, if required, permanently bonded with such material as wood veneer, synthetic veneer, plastic foils etc., giving the effect of having being carved or machined from solid wood with a penetration depth in excess of 2mm.

3. In the use of a die and carrier plate for embossing and moulding and surface decorating of either flat or pre-moulded substrates with uncured resin films such as melamine where the uniform temperature and pressure obtained allows the fusing and self bonding of the films in one operation.

Preferably the die is of laminar construction and comprises a stack of at least two pieces of sheet material individually shaped such that together they define the desired overall shape of the die.

Such a die may be manufactured, to a maximum embossing depth D given by

$$nd \geq D$$

where n is a whole number and d is the thickness of available stock sheet selected for die or mould making, by notionally slicing the desired final die body, parallel to or conformably with the base thereof, into strata each of thickness d, forming each stratum from said stock sheet in one piece or several discrete pieces as determined by the die pattern when so sliced, assembling the die body by sandwiching the formed strata together to constitute the required shape, and adapting the die body, or the lowermost stratum thereof, for attachment to the carrier plate.

It is to be understood, however, that the carrier plate can be used in connection with dies produced in the conventional manner instead of laminar dies as described above.

The material of choice for the stock sheet used for making the dies is aluminium, but other metals, both soft and hard including brass, and even hard thermosetting plastics, may be used.

A laminar die made as above is very similar in structure to a well known type of geographical relief model built up from superimposed slices of wood or plastics of suitable thickness, each successive slice being cut to represent a successive contour line on a corresponding flat map. The notional process of slicing the die body is analogous to dismantling the geographical relief model into its component contour layers. The profile of the die body in section, however, unlike that of the model, is not normally stepped but smooth.

The carrier plate, to which the die is affixed for use, is preferably made from a sheet of metal of high thermal conductivity, such as aluminium. In use the carrier plate is protected from distortion by close attachment in any suitable manner to a pressure plate or roller of stronger material such as steel.

Attachment of the die strata one to another, and of the die to the carrier plate, can be by means of screws of rivets or a suitable adhesive composition, with or without locating pins and corresponding holes to facilitate correct assembly with all the edges in register, and a smooth (or unstepped) cross-sectional profile.

While laminar dies are preferred for complex patterns, the die could be one in which n = 1, the pattern having a uniform depth equal to that of a single sheet of the stock die material, and the die therefore comprising but a single stratum.

A plurality of dies may be affixed to single carrier plate. Thus large areas of the article or substrate may be worked in a single pass or pressing, up to and including the standard sizes (e.g. 8 feet x 4 feet) in which wood based composition boards are commercially available. The uniformly heated surface of the carrier plate carrying the die or dies contacts the surface of the article or sub strata being embossed. While due to its relatively large area the carrier plate does not compress the substrate to any appreciable extent, by its even temperature and pressure it reduces the fibre fatigue and enchances the malleability of the article or substrate around the upper or outer edges of embossed or moulded substrates. This gives unbroken edges and a sharp sectional profile to the design, overcoming the "cold leading edge" problem.

Since the carrier plate is relatively cheap, dies or moulds may be permanently affixed or bonded thereto, and new sheet stock used for new carrier plates. The size of the carrier plate is limited only by the size of the pressure plate in the pressing medium available to the operator.

It will be appreciated that the the dies may, of course, exhibit wear after much repeated use, but when manufactured in laminar form as described above, they are cheap enough to replace economically. The raw material for their manufacture, such as aluminium, is available in the form of sheets of precise uniform thickness at reasonable cost.

The invention will be appreciated in greater detail from the following description of a particular and preferred embodiment thereof given by way of example only, with reference to the accompanying drawings, in which:-

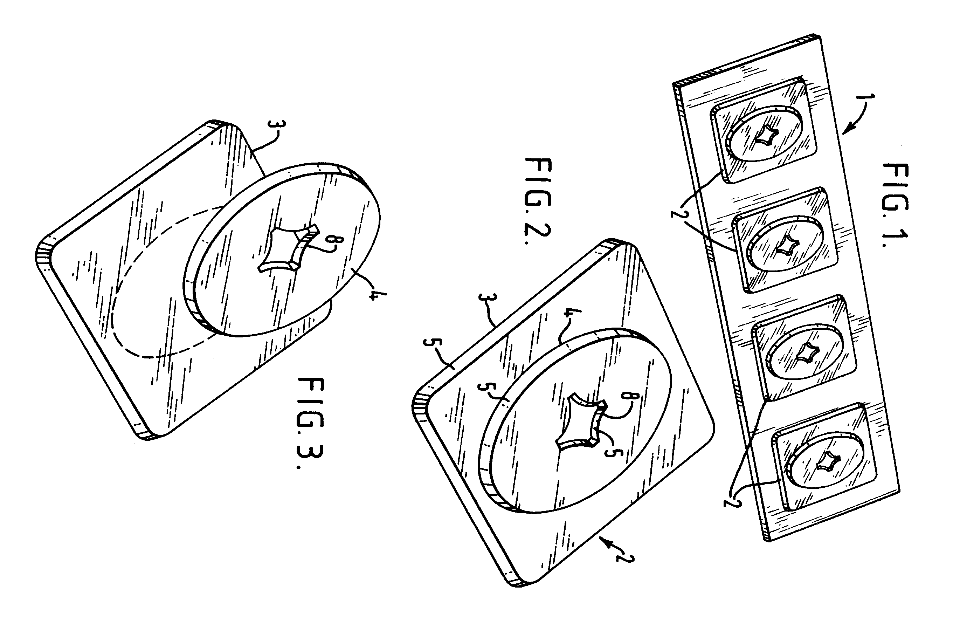

Fig. 1 is a perspective view of a carrier plate with with four dies attached; four dies attached;

Fig. 2 is a perspective view of one of the dies from Fig. 1;

Fig. 3 is an exploded perspective view of the die of Fig. 2;

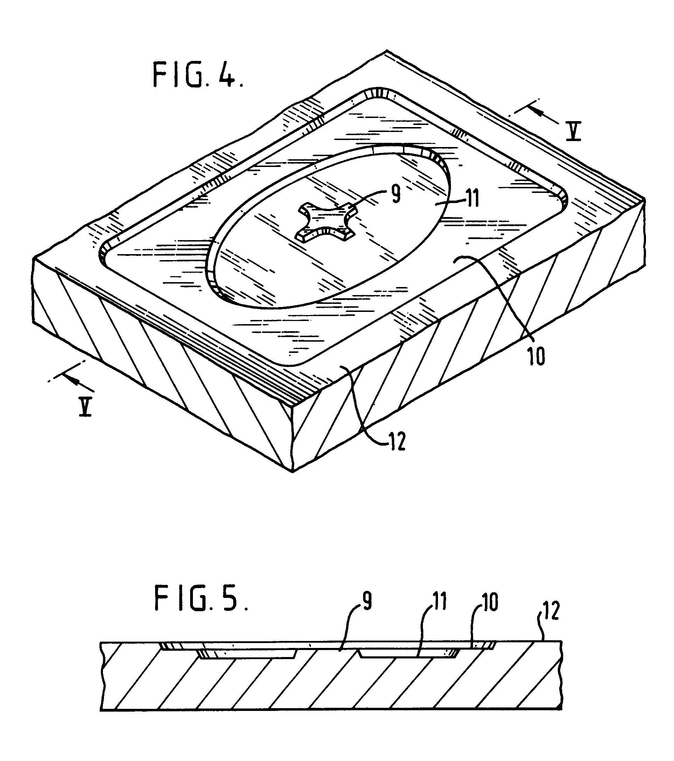

Fig. 4 is a perspective view of a piece of substrate bearing a pattern embossed therein by means of the die of Fig. 2;

Fig. 5 is a cross-section taken along the line V-V in Fig. 4, and viewed in the direction of the associated arrows to show the embossed profile;

Fig. 6 is a cross-sectional view of a conventional die in use with a substrate (this Figure does not form part of the invention and is present for comparative purposes only);

Fig. 7 is a cross-sectional view of a die and carrier plate according to the invention in use with the substrate.

Fig. 8 is Fig. 7 with the die and carrier plate removed and a surface decorative finish in position for attachment to the substrate; and

Fig. 9 shows the surface decorative finish interposed between the substrate and the die and carrier plate.

Referring now to the drawings, a carrier plate 1 comprises a 6 feet x 2 feet sheet of 1/4" sheet aluminium. It bears adhesively or mechanically affixed thereto four dies 2, the assembly being intended for use in an embossing press having a pressure plate at least 6 feet x 2 feet and conventional heating facilities. Moulding or embossing is carried out in the press at a pressure of several hundred pounds per square inch at a temperature of between 10 and 260˚C, the dwell time being anything from 30 seconds to 5 minutes. The pressure may range from 100 to 1000 pounds per square inch, except in the case of high density fibre board (wallboard) for which a pressure of several thousand pounds per square inch may be necessary. Alternatively, where the density of the substrate is very high as in the Medium Density Fibre board, a rough pre-machining of the design area will enable a lower pressure requirement to be utilised. Heating is by any suitable means such as steam or low voltage electricity.

The die 2 is laminar and is made up from two cutouts 3 and 4 of 1/8 inch thick aluminium sheet, the side faces 5 of which are chamfered. The cutouts 3, 4 are fixed together in intimate contact using a commercial adhesive or by a mechanical method.

Locating pins (not shown) project from holes on the carrier plate 1, and the dies are located on the plate in intimate contact therewith by means of corresponding holes in the underside of the cutouts 3. The cutout 4, which is circular, has a central opening 8 of decorative shape with chamfered sides 5 which produces an upstanding decorative relief portion 9 of corresponding shape in the embossed article 12. The cutouts 3 and 4 conversely produce depressions 10, 11 in the finished article 12.

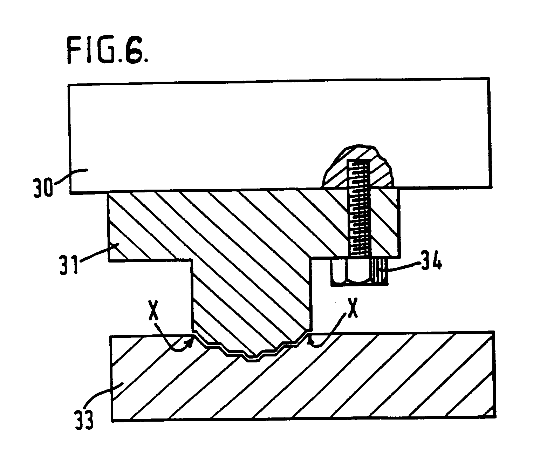

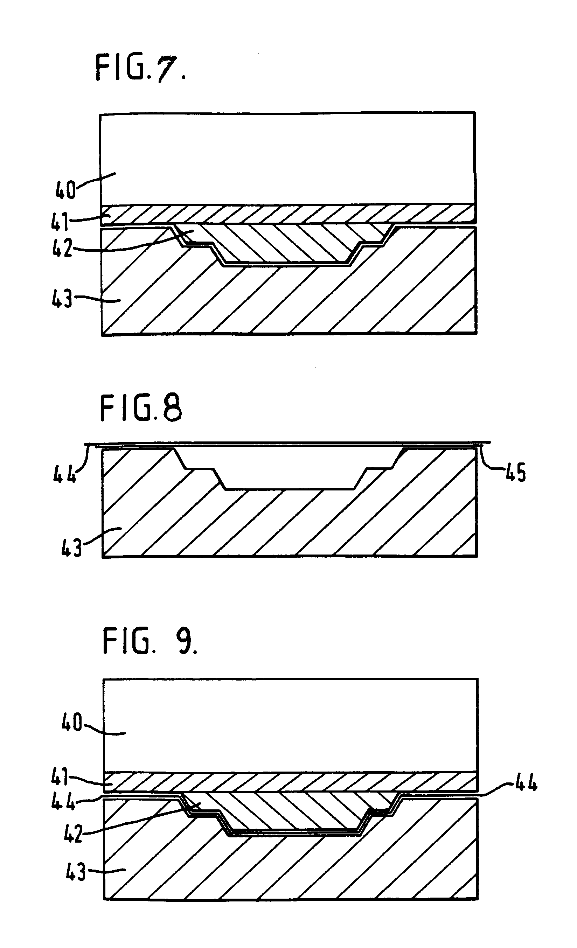

Referring now to Figs. 6 and 7 of the drawings, Fig. 6 (which is not part of the present invention and is present for comparative purposes only) shows a conventional pressure and heating chamber 30 having a die or tool 31 affixed thereto. A substrate 33 is shown and as will be observed, when the die 31 presses on the substrate 33, only a portion of the substrate 33 is exposed to the action of the die 31 and consequently a cold leading edge effect is usually observed at X and X as shown in Fig. 6. As is known, a fixing screw 34 is provided which fastens the die 31 to the chamber 30. A further problem with conventional dies similar to Fig. 6 is that critical adjustement of the downward stroke is required, but almost impossible to attain, while avoiding damage to the surface of the substrate at 'X' in Fig. 6 particularly when there is a surface decoration film having a thickness as low as 0.125mm present.

In Fig. 7, there is shown a pressure and heating chamber 40 having a carrier plate 41 and die 42 according to the present invention thereon, the carrier plate 41 having the die 42 affixed thereto as previously described. It will be observed that in Fig. 6, only the die per se contacts the substrate, whereas in Fig. 7, both the die 42 and the surrounding portion of the carrier plate 41 contacts the substrate. The effect of this is that the surface of the carrier plate functions effectively as a die and presses on the substrates very slightly. The result is the virtual elimination of the cold leading edge effect which in turn provides clarity of design and elimination of damage to the substrate 43.

Referring now to Figs. 8 and 9 of the drawings, in Fig. 8 the substrate 43 has already been embossed as it is necessary to apply a surface decorative finish 44 to the substrate. For example, the substrate 43 may be raw chipboard and the surface decorative finish 44 may be a wood veneer. Adhesive is applied to the embossed surface of the substrate 43 and the pressure/heating chamber 40, the carrier plate 41 and the mould 42 are lowered onto the substrate 43 which lowering forms the surface decorative finish 44 and presses it onto the substrate 43. The heat and pressure enable the surface decorative finish 44 to adhere to the substrate 43. Sometimes a problem arises in that the surface decorative finish is porous and allows the heated adhesive to pass through it onto its upper surface thereby ruining the finish. This problem may be overcome by using an adhesive film 45 rather than a liquid adhesive which film consists of paper impregnated with adhesive. An example of such an adhesive film is Tego Glue Film. The film 45 is placed on the substrate and the surface decorative finish 44 placed on top of the film 45. The paper of the film 45 forms a membrane which prevents excess adhesive from passing through the pores of the decorative surface finish 44. Furthermore, the use of the film 45 provides a controlled quantity of adhesive which, over a period of time, reduces the overall costs of making such a laminate finish.

## Claims

1. A method of compression moulding or embossing a board of wood-based material (12) by pressing a heated die (2) into the surface of the board characterised in that the die is secured to one surface of a carrier plate (1) which is of thermally conductive material and extends laterally beyond the edges of the die, the die being heated and pressed into the board by applying heat and pressure to the die via the carrier plate, the die being pressed into the board to a depth such that the said surface of the carrier plate contacts the surface of the article.

2. A method according to claim 1, further including providing a surface decorative finish (44) over-lying the previously moulded or embossed board (43), applying adhesive and heating the die (42) and pressing it onto the board to cause the decorative finish to be formed and to adhere to the board.

3. A method according to claim 1 or claim 2, wherein the die is laminar and comprises a stack of at least two pieces of sheet metal individually shaped so that together they define the overall shape of the die.

## Revendications

1. Procédé pour le moulage par pression ou l'estampage d'un panneau en matériau à base de bois (12) par pression d'une matrice chauffée dans la surface du panneau, caractérisé en ce que la matrice est fixée à une surface d'une plaque de support (1) qui est en matériau conducteur de la chaleur et s'étend latéralement au-delà des bords de la matrice, ladite matrice étant chauffée et pressée dans le panneau en appliquant à celle-ci chaleur et pression par l'intermédiaire de la plaque de support, la matrice étant pressée à l'intérieur du panneau jusqu'à une profondeur telle que ladite surface de la plaque de support vienne en contact avec la surface de l'article.

2. Procédé selon la revendication 1, qui comprend en plus la réalisation d'une finition de surface décorative (44) par dessus le panneau préalablement moulé ou estampé (43), l'application d'un adhésif et le chauffage de la matrice (42), puis la pression de celle-ci dans le panneau pour que la finition décorative se forme et adhère au panneau.

3. Procédé selon la revendication 1 ou la revendication 2, dans lequel la matrice est laminaire et comprend un empilement d'au moins deux pièces de tôle métallique qui sont formées chacune de façon que, assemblées, elles définissent la forme extérieure de la matrice.

## Patentansprüche

1. Ein Verfahren zum Formpressen oder Vollpraegen einer Platte aus einem auf Holz basierenden Material (12), bei dem ein erhitzter Stempel (2) in die Oberflaeche der Platte eingedrueckt wird, dadurch gekennzeichnet, dass der Stempel an einer Oberflaeche einer Traegerplatte (1) befestigt ist, die aus einem waermeleitenden Material besteht und sich seitlich ueber die Raender des Stempels erstreckt, wobei der Stempel erhitzt und in die Platte eingepresst wird indem ueber die Traegerplatte Waerme und Druck auf den Stempel ausgeuebt wird und er so tief in die Platte eingepresst wird, bis die genannte Oberflaeche der Traegerplatte die Oberflaeche des Gegenstandes beruehrt.

2. Ein Verfahren nach Anspruch 1, das weiterhin eine Oberflaechenveredelung (44) vorsieht, die ueber der zuvor geformten oder gepraegten Platte (43) liegt, wobei Klebemittel verwendet und der Stempel (42) erhitzt wird und auf die Platte gepresst wird, wodurch die Oberflaechenveredelung gebildet wird und an der Platte anhaftet.

3. Ein Verfahren nach Anspruch 1 oder 2, wobei der Stempel lamellenfoermig ist und einen Stapel von mindestens zwei Metallblechstuecken aufweist, die individuell geformt sind, so dass sie gemeinsam die Gesamtform des Stempels definieren.

FIG. 1.

FIG. 2.

FIG. 3.

FIG. 4.

9
11
10
12
Y
Y

FIG. 5.

9
11
10
12

FIG.6.

FIG.7.

40
41
42
43

FIG.8

44
45
43

FIG. 9.

40
41
44
44
42
43